# EUROPEAN PATENT APPLICATION

(11) **EP 4 741 999 A1**
(43) Date of publication of application: **13.05.2026**
(21) Application number: 24852337.5
(22) Date of filing: 07.08.2024
(51) Int. Cl.: G06F 1/3203, G06F 1/26, H04W 4/02

(54) **ELECTRONIC DEVICE HAVING DUAL BATTERIES AND CONTROL METHOD THEREOF**

(30) Priority: 08.08.2023 KR 20230103400; 10.10.2023 KR 20230134590
(71) Applicant: Samsung Electronics Co., Ltd., Suwon-si, Gyeonggi-do 16677 (KR)
(72) Inventor: KIM, Cheonshik, Suwon-si, Gyeonggi-do 16677 (KR); SEO, Hyunmin, Suwon-si, Gyeonggi-do 16677 (KR); KIM, Seunghwan, Suwon-si, Gyeonggi-do 16677 (KR); LEE, Dongsub, Suwon-si, Gyeonggi-do 16677 (KR); LEE, Hyungmin, Suwon-si, Gyeonggi-do 16677 (KR); JEON, Minhwan, Suwon-si, Gyeonggi-do 16677 (KR)
(74) Representative: HGF
(86) International application number: PCT/KR2024/011705
(87) International publication number: WO 2025/033984

(57) **Abstract**

An electronic device according to various embodiments disclosed herein may comprise: a power amplifier; an interface power management circuit; a first battery for supplying power to the interface power management circuit; a plurality of power management circuits for supplying the power from the interface power management circuit to the power amplifier; a second battery connected in parallel with the first battery so as to selectively supply power to the interface power management circuit or the plurality of power management circuits; and one or more processors for controlling the power of the second battery to be directly supplied to the plurality of power management circuits on the basis of the occurrence of a designated communication event.

## Description

### [Technical Field]

The disclosure relates to an electronic device having dual batteries and a method of controlling the same.

### [Background Art]

Portable electronic devices, such as smartphones or tablets, may perform communication via various communication systems, such as cellular communication or short-range wireless communication, and may transmit and receive various information through various media according to the user's needs.

However, when urgent communication is required in an emergency situation or in a situation or area where a communication system is unstable, communication through an existing communication system of an electronic device may be unstable or impossible, and thus a non-terrestrial wireless communication (e.g., satellite communication) service has been proposed. Electronic devices may transmit emergency SOS signals or help request messages via non-terrestrial wireless communication (e.g., satellite communication), and the transmitted messages may be relayed to ground-based rescue teams or relevant authorities.

The above-described information may be provided as related art to aid understanding of the disclosure. No claim or determination is made as to whether any of the above is applicable as prior art related to the disclosure.

### [Disclosure of Invention]

### [Solution to Problem]

An electronic device according to an embodiment disclosed herein may include a power amplifier, an interface power management circuit, a first battery configured to supply power to the interface power management circuit, a plurality of power management circuits configured to supply power from the interface power management circuit to the power amplifier, a second battery connected in parallel with the first battery and configured to selectively supply power to the interface power management circuit or the plurality of power management circuits, and one or more processors configured to control power of the second battery to be directly supplied to the plurality of power management circuits, based on occurrence of a designated communication event.

A method, according to an embodiment disclosed herein, for an electronic device, including a first battery configured to supply power to the interface power management circuit, a plurality of power management circuits configured to supply power from the interface power management circuit to the power amplifier, and a second battery connected in parallel with the first battery and configured to selectively supply power to the interface power management circuit or the plurality of power management circuits, may include identifying whether a designated communication event has occurred, controlling, based on occurrence of the designated communication event, power of the second battery to be directly supplied to the plurality of power management circuits in parallel with power of the first battery, and controlling, based on non-occurrence of the designated communication event, power of the second battery to be supplied to the interface power management circuit.

The technical problems to be solved by the disclosure, technical features, and effects are not limited to the technical problems, technical features, and effects mentioned above, and other technical problems, technical features, and effects not mentioned may be clearly understood by those skilled in the art to which the disclosure pertains from the description below.

### [Brief Description of Drawings]

In connection with the description of the drawings, the same or similar reference numerals may be used for identical or similar components.
FIG. 1 is a block diagram of an electronic device within a network environment according to an embodiment.
FIG. 2 illustrates examples of the structure and folding configuration of a foldable electronic device according to an embodiment.
FIG. 3 is a diagram illustrating an electronic device and a long-distance communication network environment according to an embodiment.
FIG. 4 illustrates a satellite communication frame structure according to an embodiment.
FIG. 5 is a diagram illustrating an example of a user interface for providing satellite communication services in an electronic device according to an embodiment.
FIG. 6 is a diagram illustrating an example of a user interface for providing satellite communication services in an electronic device according to an embodiment.
FIG. 7 is a block diagram of an electronic device according to an embodiment.
FIG. 8 is a diagram illustrating the operation of an electronic device according to an embodiment.
FIG. 9 is a diagram illustrating the operation of an electronic device according to an embodiment.
FIG. 10 is a flowchart illustrating the operation of an electronic device according to an embodiment.
FIG. 11 is a flowchart illustrating the operation of an electronic device according to an embodiment.
FIG. 12 is a diagram illustrating the structure of an electronic device according to an embodiment.
FIG. 13 is a diagram illustrating the effects of the operation of an electronic device according to an embodiment.

### [Mode for the Invention]

Hereinafter, embodiments of the disclosure will be described in detail with reference to the drawings so that those skilled in the art to which the disclosure pertains can easily implement the disclosure. However, the disclosure may be implemented in various different forms and is not limited to the embodiments described herein. In connection with the description of the drawings, the same or similar reference numerals may be used for identical or similar components. Furthermore, in the drawings and related descriptions, descriptions of well-known functions and configurations may be omitted for clarity and conciseness.

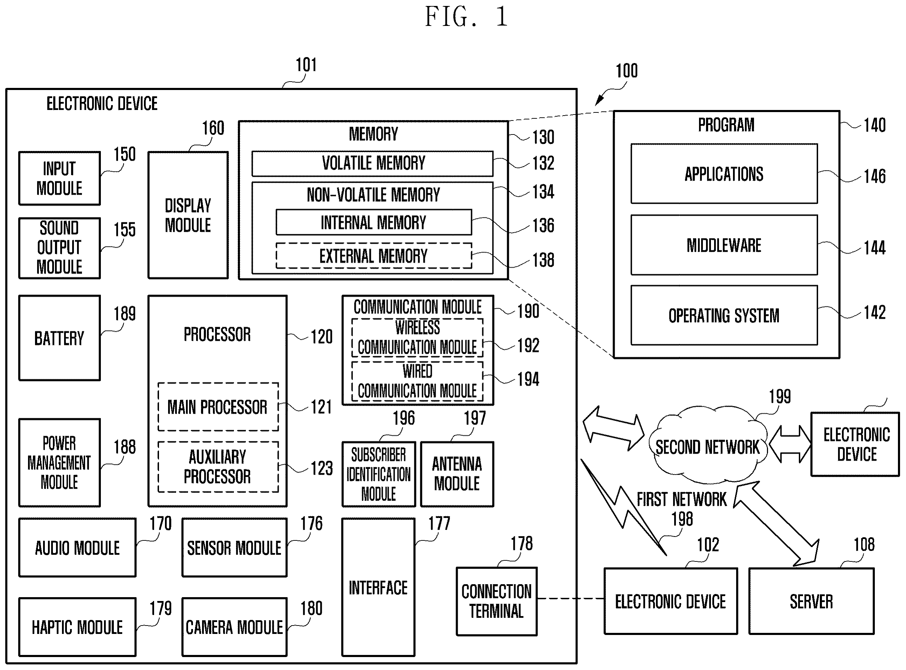

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

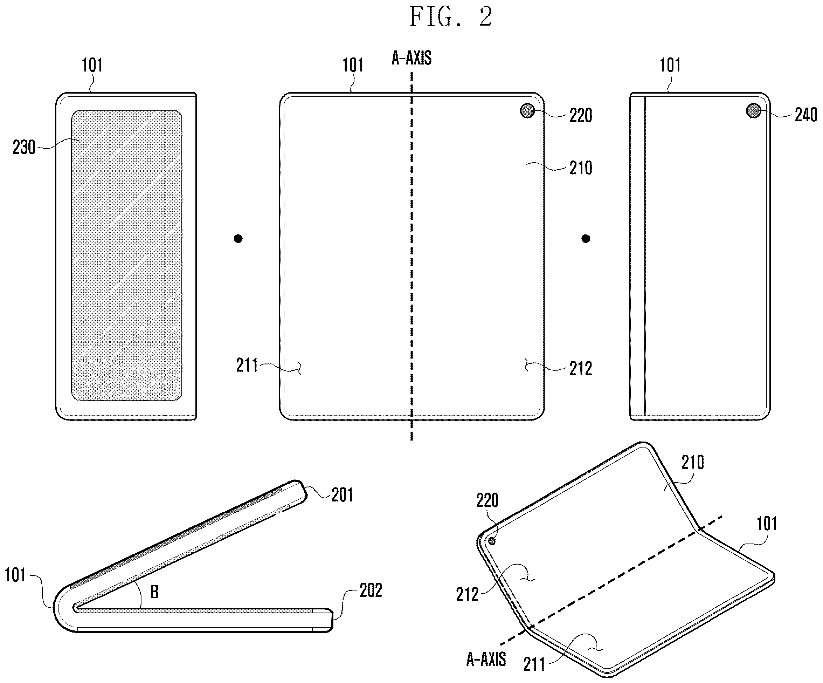

FIG. 2 illustrates an example of structural and shape changes in an electronic device equipped with a flexible display according to various embodiments.

Referring to FIG. 2, an electronic device (e.g., the electronic device 101 of FIG. 1) according to an embodiment may be a foldable electronic device. According to various embodiments, a display 210 of the electronic device 101 may include at least some of the structures and/or functions of the display module 160 in FIG. 1.

A foldable electronic device 101 according to an embodiment may include two housings based on a folding axis (e.g., the A-axis), a flexible display 210 (e.g., the display module 160 in FIG. 1), a front camera 220 (e.g., the camera module 180 in FIG. 1), an auxiliary display 230 (e.g., the display module 160 in FIG. 1), and a rear camera 240 (e.g., the camera module 180 in FIG. 1), and include at least some of the structures and/or functions of the electronic device 101 in FIG. 1. The two housings may be folded by a hinge structure, and may be folded and overlapped around at least one axis.

Among the two housings constituting the housing of the electronic device 101, a first housing 201 may include a first surface and a second surface, and a second housing 202 may include a third surface and a fourth surface. For example, the first display 210 of the electronic device 101 may be folded about the A-axis such that the first surface of the first housing faces the third surface of the second housing. Here, the folding of the electronic device may be such that the angle (e.g., angle B) formed between the first surface of the first housing and the third surface of the second housing is approximately 0 degrees (e.g., 0 to 5 degrees). For example, the folding of the electronic device 101 may include a closed state or a completely folded state. The display 210 may be physically divided into a first region 211 and a second region 212 by folding, so that the first region may be located on the first surface of the first housing and the second region may be located on the third surface of the second housing. The first housing and the second housing may be disposed on both sides of the folding axis (e.g., the A-axis) and may have an overall symmetrical shape with respect to the folding axis. Referring to FIG. 2, the first housing may be disposed on the left side of the folding axis, and the second housing may be disposed on the right side of the folding axis. The first and second housings may be designed to fold relative to each other, and may be overlapped such that the first surface of the first housing and the third surface of the second housing face each other in a folded state. For example, an unfolded state may refer to an open state (opened state) or a flat state. For example, the unfolded state may include a state in which the first and second housings of the electronic device 300 are disposed at approximately 180 degrees (e.g., 170 to 180 degrees) such that the display 210 is exposed.

According to various embodiments, a hinge may be formed between the first housing and the second housing, thereby allowing the first housing and the second housing of the electronic device 101 to be folded. However, the structure in which the housings of the electronic device are disposed on left and right sides of the folding axis is merely an example, and the electronic device may have housings disposed vertically relative to the folding axis.

According to various embodiments, the electronic device 101 may include an auxiliary display 230 (e.g., the display module 160 in FIG. 1) on at least a portion of the first housing or the second housing. Referring to FIG. 2, the auxiliary display 230 may be formed on at least a portion of the second surface of the first housing of the electronic device 400. The auxiliary display 230 may also be disposed on the fourth surface of the second housing, and may also be formed across some or the entire area of the second surface of the first housing and the fourth surface of the second housing. The auxiliary display 230 may include at least some of the structures and/or functions of the display module 160 in FIG. 1.

According to various embodiments, the electronic device 101 may include one or more batteries (e.g., the battery 189 in FIG. 1) in each of the first housing and the second housing.

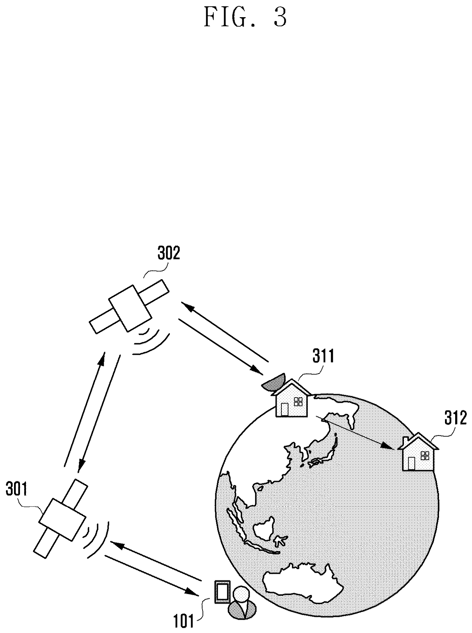

FIG. 3 is a diagram illustrating an electronic device (e.g., the electronic device 101 in FIG. 1 or FIG. 2) and a long-distance communication network environment according to an embodiment.

A typical wireless communication network (e.g., a radio access network (RAN)) may transmit and/or receive signals to and from the electronic device 101 via a base station (cell tower) disposed on the ground. The coverage of a typical base station may be approximately 1.6 to 5 km. If the electronic device 101 leaves this coverage, communication is impossible, and thus, communication services may only be provided in specific areas, such as cities where the base station is disposed. Typical wireless communication networks may provide data rates of up to approximately 114 kbps for 2G, up to approximately 14.4 Mbps for 3G, up to approximately 1 Gbps for 4G, and up to approximately 20 Gbps for 5G.

For non-terrestrial communications, non-terrestrial communication devices, such as low-Earth orbit satellites operating at altitudes of approximately 300 to 1,010 km, may be used. For example, multiple satellites may be distributed in Earth's orbit so that at least one satellite is visible at various times and locations, enabling extremely wide coverage across the globe. However, the maximum data rate for communications between mobile devices and satellites is approximately 2.4 kbps, allowing the transmission and/or reception of small data such as short messages or location information.

According to an embodiment, a non-terrestrial communication system may include one or more non-terrestrial wireless communication devices 301 and/or 302, a terrestrial wireless communication device (ground station) 311, and an electronic device (e.g., the electronic device 101 in FIG. 1 or 2).

The electronic device 101 according to an embodiment may transmit and/or receive data via a terrestrial network and/or a non-terrestrial network.

The terrestrial network may refer to a network capable of providing data communication via the terrestrial wireless communication device 311. For example, the terrestrial wireless communication device 311 may include a base station located on the ground (e.g., fixed to the ground). The terrestrial wireless communication device 311 may support at least one of various communication methods capable of being supported by the electronic device 101. For example, the terrestrial wireless communication device 311 may include an eNodeB or gNodeB, but there is no limitation on its type.

The non-terrestrial network may refer to a network capable of providing data communication via the non-terrestrial wireless communication devices 301 and/or 302. For example, the non-terrestrial wireless communication devices 301 and/or 302 may include at least one of various communication devices, such as base stations and repeaters, that are not located on the ground. For example, the non-terrestrial wireless communication devices 301 and/or 302 may include satellites and/or unmanned aerial vehicles, but there is no limitation on their types. For example, the satellites may include low-Earth orbit (LEO) satellites, medium-Earth orbit (MEO) satellites, geostationary Earth orbit (GEO) satellites, and/or high elliptical orbit (HEO) satellites, and may provide communication services throughout the globe. Hereinafter, when describing non-terrestrial networks, satellites, satellite communications, or satellite networks may be used as examples, but this is for convenience of explanation, and the embodiments are not limited thereto.

According to an embodiment, as an example of the non-terrestrial wireless communication devices 301 and/or 302, a satellite system provides communication services across the globe using 66 satellites orbiting in a low-Earth orbit (LEO) at an altitude of approximately 780 km.

The non-terrestrial wireless communication devices 301 and/or 302 may support at least one of various wireless communication methods. For example, the non-terrestrial wireless communication devices 301 and/or 302 may support the NR NTN (non-terrestrial network) defined by the 3rd generation partnership project (3GPP). Alternatively, the non-terrestrial wireless communication devices 301 and/or 302 may support at least one of various communication methods based on various communication standards, such as LTE, global system for mobile communications (GSM), and code-division multiple access (CDMA), but there is no limitation on the type of communication method.

The terrestrial network and the non-terrestrial network may be independent networks of each other. Alternatively, the terrestrial network and the non-terrestrial network may be included in at least one network that is related to each other (e.g., a network provided by the same operator).

The electronic device 101 may perform wireless communication via a non-terrestrial network when communication with the terrestrial network is unavailable or not smooth. Alternatively, the electronic device 101 may also perform wireless communication via a non-terrestrial network regardless of the status of communication with the terrestrial network.

According to an embodiment, the electronic device 101 may communicate with a satellite 301 via a service link. The service link between the electronic device 101 and the non-terrestrial wireless communication device 301 uses a low-frequency (e.g., approximately 1616 to 1626 MHz) for communication between the non-terrestrial wireless communication device in space and the terrestrial electronic device 101, and may require approximately several minutes to transmit data, such as text messages (e.g., emergency communication messages).

According to an embodiment, the non-terrestrial wireless communication device 301 and the non-terrestrial wireless communication device 302 may communicate at a high transmission rate via an inter-satellite link using optical or high-frequency bands in space. The non-terrestrial wireless communication device 301, which receives data from the electronic device 101, may transmit the received data to the non-terrestrial wireless communication device 302 closest to the terrestrial wireless communication device 311.

According to an embodiment, the non-terrestrial wireless communication device 302 may communicate with the terrestrial wireless communication device 311 via a feeder link that may utilize a wider frequency bandwidth at a higher frequency than the service link. The non-terrestrial wireless communication device 302 may transmit data of the electronic device 101 to the terrestrial wireless communication device 311 via a feeder link, and the terrestrial wireless communication device 311 may transmit an emergency communication message to an emergency center 312 via a wireless communication network.

According to an embodiment, when a user requires communication in a situation where wireless communication services are not available (e.g., in the event of an accident or distress) in an area (e.g., a remote area) where a wireless communication network is not available during various outdoor activities (e.g., jogging, marathon, cycling, golf, hiking, military activities), the electronic device 101 may activate an emergency communication (e.g., SOS emergency) service function via satellite communication.

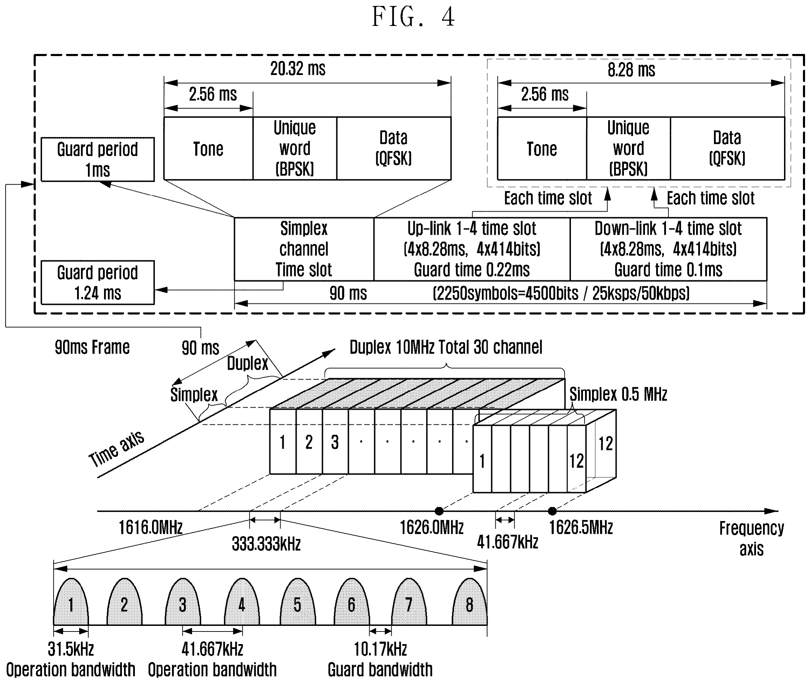

FIG. 4 illustrates a frame structure of satellite communication according to an embodiment.

According to an embodiment, an electronic device (e.g., the electronic device 101 in FIG. 1, FIG. 2, or FIG. 3) may perform an emergency communication service function via satellite communication. For example, the electronic device 101 may provide a communication service, such as a short burst data (SBD) service at a data rate of 2.4 kbps, via satellite communication.

According to an embodiment, the electronic device 101 may use a transmission power of approximately 5 watts (37 dBm) for satellite communication.

According to an embodiment, the satellite communication method may use a duplexing method of a time divisional duplexing (TDD) scheme and a multiple access method of a frequency divisional multiple access/time divisional multiple access (FDMA/TDMA) scheme, and may include a duplex channel band including 30 sub-bands (approximately 10 MHz = 333 kHz*30 sub-bands) and a 500 kHz simplex channel band used for ring and/or paging.

According to an embodiment, the duplex channel band may be divided into eight frequency access channels and configured to have a channel bandwidth of 41.67 kHz (333 kHz = 8*41.67 kHz). For example, an occupied bandwidth of approximately 31.5 kHz may be utilized using a differentially encoded coherent quadrature phase-shift keying (DE-QPSK) modulation scheme.

For satellite communication systems, such as the Iridium communication system, an equivalent isotropic radiated power (EIRP) of at least 29 dBm is required, and for this purpose, the electronic device 101 may use a transmission power (Tx power) of approximately 36 dBm or more.

To output a high transmission power (Tx power) of approximately 36 dBm for satellite communication, the electronic device 101 may require a high voltage (PA VCC) of approximately 5 V or more and a current (PA current) of approximately 2 A or more from the power amplifier.

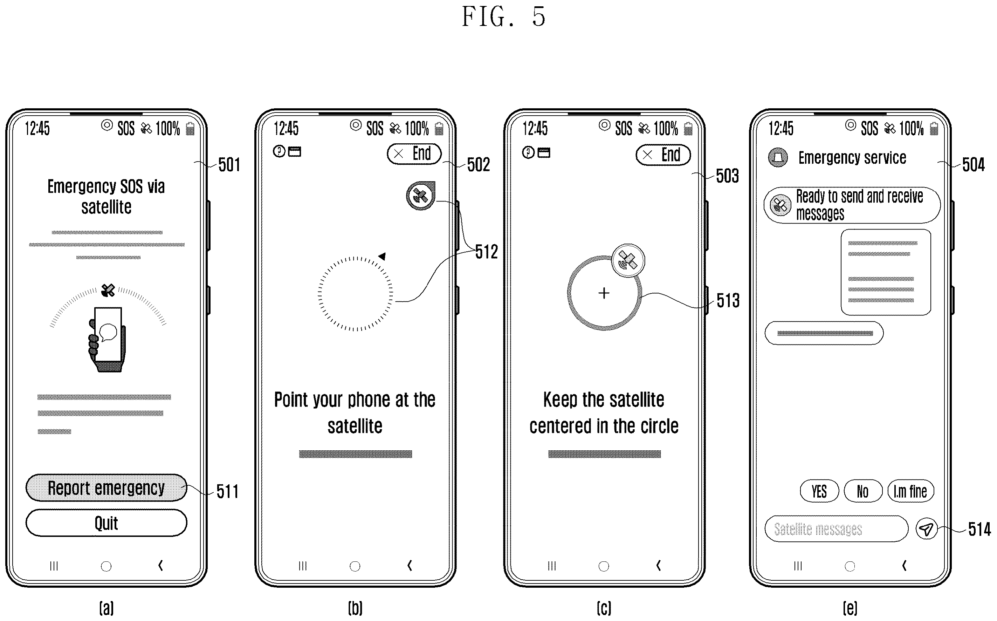

FIG. 5 is a diagram illustrating an example of a user interface for providing satellite communication services in an electronic device (e.g., the electronic device 101 in FIG. 1, FIG. 2, or FIG. 3) according to an embodiment.

An electronic device 101 according to an embodiment may transmit emergency messages via satellite.

According to an embodiment, screen (a) is an example of an interface 501 for an emergency communication service via satellite communication in order to transmit rescue messages when a satellite communication application is executed. A satellite message button (e.g., Report emergency) 511 may be selected on screen (a). For example, optional queries may be provided for reporting various situations, such as medical, motor vehicle or vessel incidents, criminal activities, or lost or stranded, through an emergency information report via satellite messages when a satellite message application is executed.

According to an embodiment, when the satellite message button 511 is selected on screen (a), screen (b) may be provided to guide a pointing operation for aligning the antenna of the electronic device 101 with the satellite.

According to an embodiment, the electronic device 101 may display, on screen (b), text and/or images to guide a pointing operation to rotate the electronic device 101 toward the satellite, when the satellite and the antenna of the electronic device 101 are not aligned, via the interface 502 for emergency communication services. For example, the text and/or images guiding the pointing operation may display an indicator indicating the position of the electronic device 101 and/or the direction of the satellite, and/or an indicator 512 indicating the position and/or direction of the satellite.

According to an embodiment, the electronic device 101 may display, on screen (c), text and/or images to guide a user to maintain the current direction of the electronic device 101 pointed toward the satellite via the interface 503 for emergency communication services. When the antenna of the electronic device 101 is aligned with the satellite, screen (c) may display an indicator 513 including text and/or an image indicating that the antenna of the electronic device 101 is aligned with the satellite.

According to an embodiment, when an emergency communication service via satellite communication is ready, the electronic device 101 may provide screen (d) including text and/or an image indicating that the emergency communication service is ready and an emergency message composition and transmission button 514 via an interface 504 for the emergency communication service.

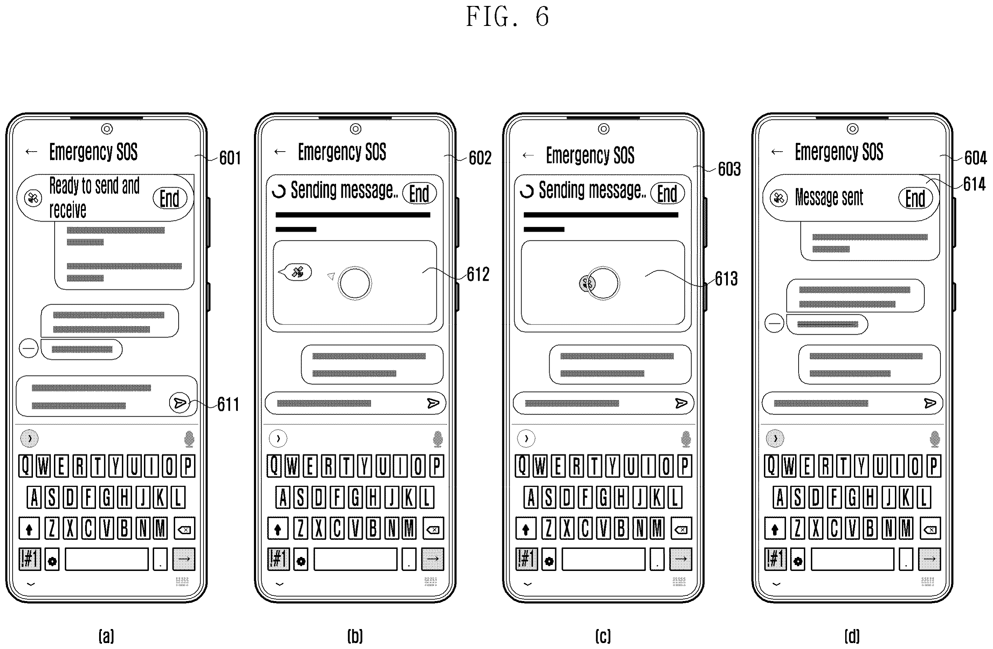

FIG. 6 is a diagram illustrating an example of a user interface for providing satellite communication services in an electronic device (e.g., the electronic device 101 in FIG. 1, FIG. 2, or FIG. 3) according to an embodiment.

A user interface 601 of an electronic device 101 according to an embodiment may display text and/or an image indicating that message transmission via the emergency communication service is possible on screen (a), and may transmit a message when the message is created and a transmission button 611 is selected.

According to an embodiment, when a message via the emergency communication service is entered and transmitted on the user interface 601 of the electronic device 101, a user interface 602 may display a notification including text and/or an image indicating that the message has been transmitted on screen (b).

According to an embodiment, when a pointing operation for satellite alignment is required after selecting the message composition and transmission button 611, the user interface 602 may further provide text and/or an image 612 for guiding the pointing operation for satellite alignment.

According to an embodiment, the electronic device 101 may further provide text and/or an image 613 indicating that satellite alignment has been achieved through the pointing operation for satellite alignment via a user interface 603 of screen (c).

According to an embodiment, when message transmission via satellite communication is completed, the electronic device 101 may display a notification 614 indicating that the message has been transmitted via a user interface 604 of screen (d). For example, when the electronic device 101 transmits an emergency communication service message to the satellite, the electronic device 101 may receive a success response from the satellite, thereby identifying that the message transmission has been completed.

According to an embodiment, when the message transmission to the satellite is successful, the electronic device 101 may determine it as a success and display a notification 614 including text and/or an image indicating that the message transmission is complete on screen (d).

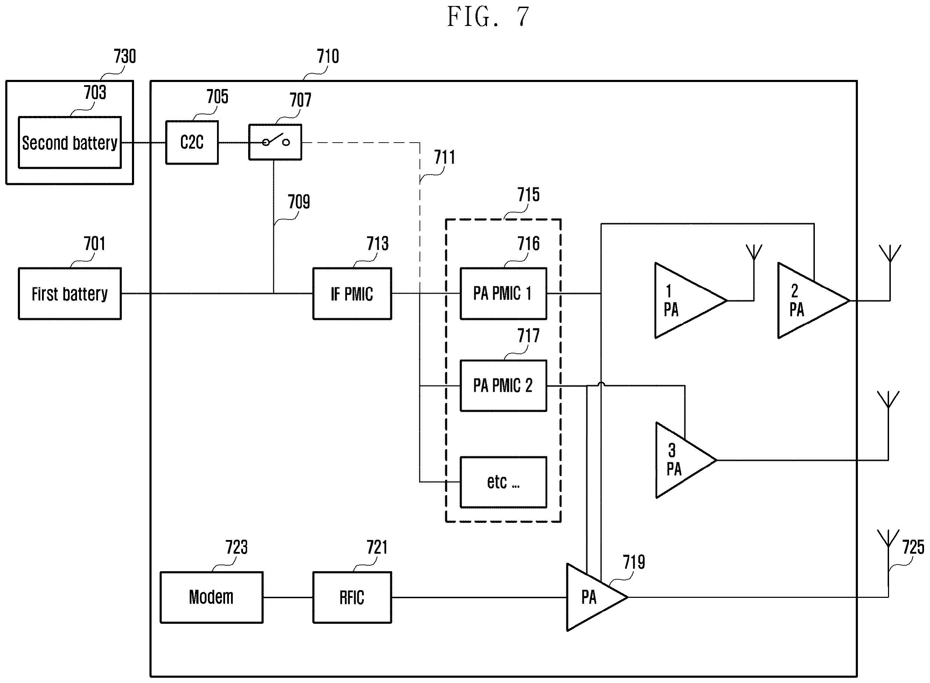

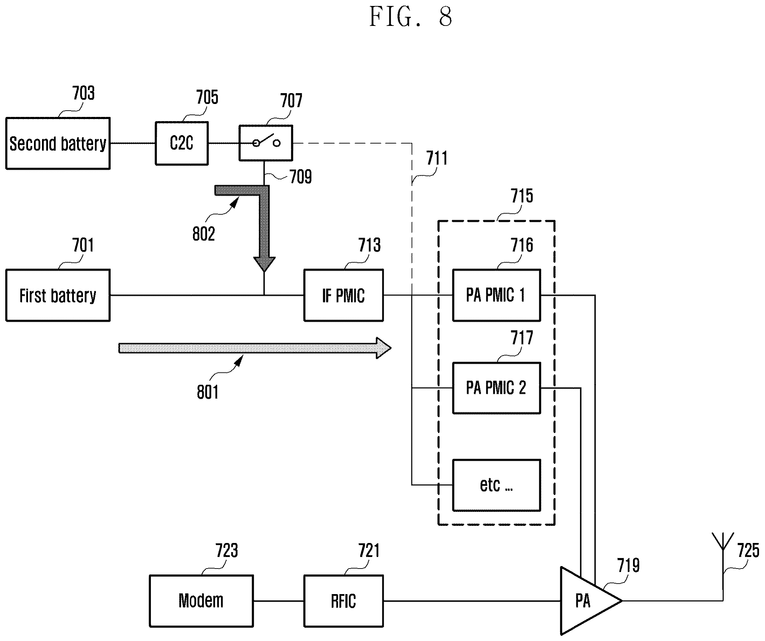

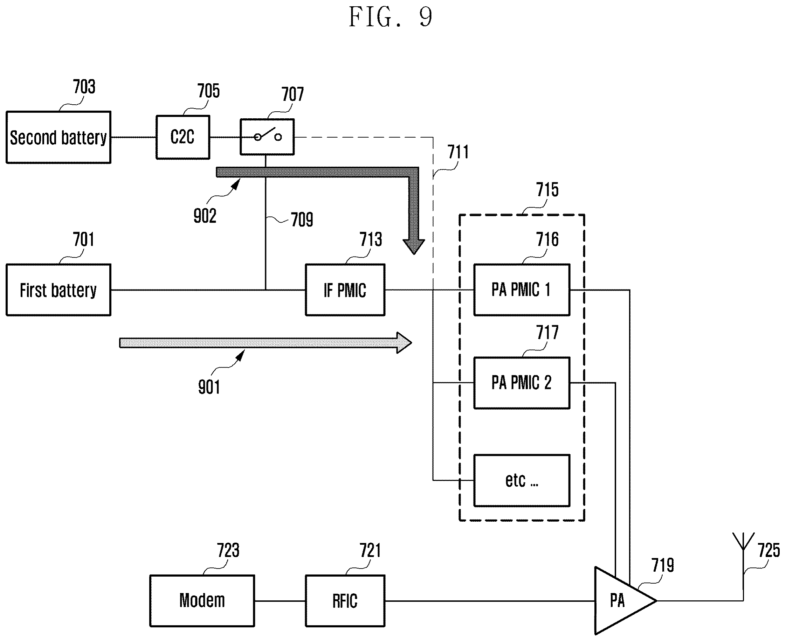

FIG. 7 is a block diagram of an electronic device (e.g., the electronic device 101 in FIG. 1, FIG. 2, or FIG. 3) according to an embodiment. FIGS. 8 and 9 are diagrams illustrating the operation of the electronic device 101.

According to an embodiment, the electronic device 101 may include a plurality of batteries including a first battery 701 and a second battery 703. In an example where the electronic device 101 is implemented as a foldable electronic device as illustrated in FIG. 2, the first battery 701 may be disposed, for example, within the first housing 201, and the second battery 703 may be disposed, for example, within the second housing 202. For example, the second battery 703 may be connected via a printed circuit board (e.g., a sub-printed circuit board) 730 that is different from the printed circuit board (e.g., a main printed circuit board) 710 to which other components are connected.

The electronic device 101 according to an embodiment may include a communication circuit or modem 723 (e.g., the processor 120 or a communication module 190 in FIG. 1), a radio frequency integrated circuit (RFIC) 721 (e.g., the communication module 190 in FIG. 1), and a power amplifier 719.

According to an embodiment, the communication circuit 723 may establish a communication channel corresponding to a designated band (e.g., approximately 1616 to 1626 MHz) among the bands to be used for wireless communication with a network (e.g., the second network 199 in FIG. 1 and/or a non-terrestrial network), and support network communication through the established communication channel. For example, the communication circuit 723 may modulate a signal to be transmitted over a network or demodulate a received signal.

According to an embodiment, the RFIC 721 may convert a signal modulated by the communication circuit 723 into an RF signal and transmit it to the power amplifier 719 for transmission through the antenna 725.

According to an embodiment, the power amplifier 719 may convert a non-terrestrial transmission signal, such as a satellite transmission signal, received from the RFIC 721 into a high-power satellite signal and transmit it through the antenna 725.

When small devices such as smartphones use high-power satellite signals in a limited mounting space, it is difficult to maintain the battery supply voltage at a designated level, thereby causing a voltage drop (Vcc drop). This may reduce the linearity of the power amplifier 719, resulting in signal distortion and degraded transmission signal quality.

According to an embodiment, during satellite communication, a voltage drop may occur at the output of an interface power management circuit 713 for signal transmission depending on conditions such as temperature or low voltage of the electronic device 101. For example, satellite communication requires a high transmission power of 36 dBm, which may result in a relatively large voltage drop even with a relatively small DCR component in the power line. Since terrestrial communication systems, such as cellular communication systems, use a relatively low transmission power of 23 to 26 dBm when the same DCR is used, even when no voltage drop occurs, satellite communication transmission may consume instantaneously a current of 2 A or more, thereby resulting in a significant voltage drop.

Satellite communication services are used to communicate with emergency service providers in emergency situations, such as distress situations, where terrestrial communication networks, such as cellular communication, are unavailable, and must be implemented to transmit signals regardless of environmental conditions, including battery voltage.

According to an embodiment, a plurality of power management circuits 715, for example, power amplifier power management ICs, may supply power to a power amplifier 719. The plurality of power management circuits 715 may include a booster (e.g., a buck booster). The plurality of power management circuits 715 may include two or more power management circuits including, for example, a first power management circuit 716 and a second power management circuit 717. The plurality of power management circuits 715 may supply power to a plurality of power amplifiers. For example, the plurality of power amplifiers may include power amplifiers that amplify a transmission signal to various frequency bands (e.g., a first power amplifier that amplifies a transmission signal to a low frequency band, a second power amplifier that amplifies a transmission signal to an intermediate frequency band, and/or a third power amplifier that amplifies a transmission signal to a high frequency band), including a power amplifier 719 that amplifies a transmission signal to a low frequency band, for example, 1.6 GHz.

According to an embodiment, the plurality of power management circuits 715 may supply power necessary to satisfy the equivalent isotropic radiated power (EIRP) required in a satellite communication system to the power amplifier 719 through the operation of two or more power management circuits.

According to an embodiment, the interface power management circuit (interface PMIC) 713 may bypass power supplied from the first battery 701 and/or the second battery 703 and use it as the main system power inside the electronic device 101. The interface power management circuit 713 may receive power from the second battery 703 through a power line (e.g., C2C) and a first power line 709.

According to an embodiment, the interface power management circuit 713 may provide power supplied from the first battery 701 and/or the second battery 703 as input power to the plurality of power management circuits 715. The interface power management circuit 713 may transmit the charging current flowing in through an interface connector to the first battery 701 and/or the second battery 703 when charging the electronic device 101, thereby performing charging.

According to an embodiment, a switch 707 may switch the power of the second battery 703 to the interface power management circuit 713 or the plurality of power management circuits 715, so that the power is supplied to the interface power management circuit 713 via the first power line 709 or directly supplied to the plurality of power management circuits 715 via the second power line 711.

According to an embodiment, when transmitting a satellite signal, in addition to supplying power of the first battery 701 to the plurality of power management circuits 715 through the interface power management circuit 713, power of the second battery 703 may be directly supplied to the plurality of power management circuits 715 through the operation of the switch 707 so that the power of the first battery 701 and the power of the second battery 703 are connected in parallel, thereby increasing the current supply to the plurality of power management circuits 715.

According to an embodiment, when transmitting a satellite signal, in addition to supplying power of the first battery 701 to the plurality of power management circuits 715 through the interface power management circuit 713, power of the second battery 703 may be directly supplied to the plurality of power management circuits 715 through the second power line 711, thereby enabling the signal output power for transmitting a satellite signal to be, for example, 36 dBm or more.

According to an embodiment, when performing communication in a typical terrestrial communication system or generally operating, one or more processors (e.g., the processor 120 in FIG. 1 or the communication circuit 723) may connect power of the second battery 703 to the power line 801 from the first battery 701 via the power supply line 802 illustrated in FIG. 8, thereby supplying the power of the second battery 703 to the interface power management circuit 713 together with the power of the first battery 701.

According to an embodiment, one or more processors may control power of the second battery 703 to be directly supplied to the plurality of power management circuits 715, based on the occurrence of a designated communication event. According to an embodiment, one or more processors may control power of the second battery 703 to be directly supplied to the plurality of power management circuits 715, based on the occurrence of a designated communication event. For example, one or more processors may transmit directly power of the second battery 703 to the plurality of power management circuits 715 in parallel while transmitting power of the first battery 701 to the plurality of power management circuits 715 through the interface power management circuit 713, thereby allowing the plurality of power management circuits 715 to supply sufficient power to the power amplifier 719.

According to an embodiment, one or more processors may control the switch 707, based on the occurrence of a designated communication event, thereby directly supplying power from the second battery 703 to the plurality of power management circuits 715.

According to an embodiment, one or more processors may include an application processor. The application processor may determine the occurrence of a designated communication event, based on the operation of a communication application running on the electronic device 101.

According to an embodiment, the application processor may provide a satellite communication service interface (e.g., the interface as illustrated in the screens in FIGS. 5 and 6) via a display (e.g., the display module 160 in FIG. 1).

According to an embodiment, the designated communication event may include the receipt of a satellite communication operation command via the satellite communication service interface.

According to an embodiment, the designated communication event may include a transmission command for a specific message via the satellite communication service interface.

According to an embodiment, the designated event may include an event in which satellite communication is performed. For example, in the example in FIG. 5, when the emergency communication service interface 501 is provided as the satellite communication application is executed, as shown in screen (a), it may be identified that a satellite communication execution event has occurred.

According to an embodiment, the designated communication event may include an event in which a satellite communication connection is established. For example, in the example in FIG. 5, when a connection with a satellite is established according to a satellite pointing operation in screen (c), and a message is written and transmitted (e.g., the transmission button 514 is selected) in screen (d), it may be identified that a designated communication event has occurred. For example, after a message is written and transmitted (e.g., the transmission button 611 is selected) in screen (a) in FIG. 6, when a satellite connection is established in screen (c), it may be identified that a designated communication event has occurred.

According to an embodiment, based on the designated communication event, one or more processors may directly supply, along a power supply line 902 as illustrated in FIG. 9, power from the second battery 703 to the plurality of power management circuits 715 in parallel with a power line 901 from the first battery 701.

According to an embodiment, the electronic device 101 may directly supply power of the second battery 703 to the plurality of power management circuits 715 through parallel connection when transmitting a satellite signal, thereby solving the voltage drop problem of the power amplifier 719. As the power of the second battery 703 is directly supplied the plurality of power management circuits 715 through parallel connection, the power of the second battery 703 may operate as additional input power for the plurality of power management circuits 715 in addition to the power of the first battery 701, thereby supplying additional current to the plurality of power management circuits 715. The additional current supply may increase the width of the power supply line to the plurality of power management circuits 715, which may have the effect of lowering the DC resistance component. Furthermore, when using high-output satellite communication transmission power, the current supply to the power amplifier 719 may be increased, and the voltage drop may be reduced.

According to an embodiment, one or more processors may control the switch 707 to directly supply power from the second battery 703 to the plurality of power management circuits 715 at the time when signal transmission conditions are met based on a designated communication event.

According to an embodiment, the time when the signal transmission conditions are met based on a designated communication event may be determined by one or more processors or communication processors, for example, a communication circuit 723.

According to an embodiment, as an example of the signal transmission conditions based on a designated event, when a satellite communication event occurs by the user selecting the satellite message button 511 in screen (a) in FIG. 5, the communication circuit 723 may perform a preparatory operation for satellite signal transmission, and when this preparatory operation is completed, the signal transmission conditions may be met.

According to an embodiment, the signal transmission conditions based on the designated event may include, for example, specific conditions that cause a voltage drop, such as low voltage or low temperature conditions, in addition to the case where the electronic device 101 satisfies conditions for satellite communication use. For example, one or more processors may control the switch 707 under a designated low voltage or low temperature conditions during use of the satellite communication such that power of the second battery 703 is directly supplied to the plurality of power management circuits 715 via the power line 902.

According to an embodiment, when the signal transmission based on the designated communication event is completed, one or more processors may control the switch 707 such that power of the second battery 703 is supplied to the interface power management circuit 713 via the power line 802 in FIG. 8.

According to an embodiment, one or more processors may control the switch 707, based on the termination of the designated communication event, such that power of the second battery 703 is supplied to the interface power management circuit 713 via the power line 802 in FIG. 8.

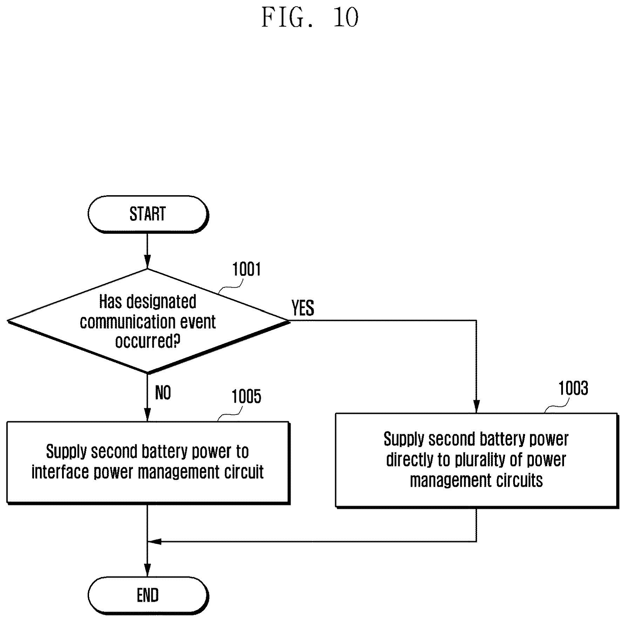

FIG. 10 is a flowchart illustrating the operation of an electronic device (e.g., the electronic device 101 in FIG. 1, FIG. 2, FIG. 3, or FIG. 7) according to an embodiment.

An electronic device 101 according to an embodiment may include a plurality of batteries including a first battery 701 and a second battery 703. The electronic device 101 according to an embodiment may include a communication circuit or modem 723 (e.g., the processor 120 or the communication module 190 in FIG. 1), a radio frequency integrated circuit (RFIC) 721 (e.g., the communication module 190 in FIG. 1), and a power amplifier 719. According to an embodiment, a plurality of power management circuits 715, for example, a power amplifier power management IC, may supply power to the power amplifier 719.

According to an embodiment, one or more processors (e.g., the processor 120 or the communication module 190 in FIG. 1 or the communication circuit 723 in FIG. 7) may identify whether a designated communication event has occurred in operation 1001.

According to an embodiment, when it is determined that a designated communication event has occurred, one or more processors may control power of the second battery 703 to be directly supplied to the plurality of power management circuits 715 in operation 1003. For example, one or more processors may transmit directly power of the second battery 703 to the plurality of power management circuits 715 in parallel while transmitting power of the first battery 701 to the plurality of power management circuits 715 through the interface power management circuit 713, thereby allowing the plurality of power management circuits 715 to supply sufficient power to the power amplifier 719.

According to an embodiment, one or more processors may control a switch (e.g., the switch 707 in FIG. 7), based on the occurrence of a designated communication event, to directly supply power of the second battery 703 to the plurality of power management circuits 715.

According to an embodiment, when a designated communication event does not occur, one or more processors may control power of the second battery 703 to be supplied to the plurality of power management circuits 715 through an interface power management circuit (e.g., the interface power management circuit 713 in FIG. 7) in operation 1005.

According to an embodiment, control of the power transmission line of the first battery 703 based on a designated communication event may be determined by one or more application processors or communication processors, for example, a communication circuit 723.

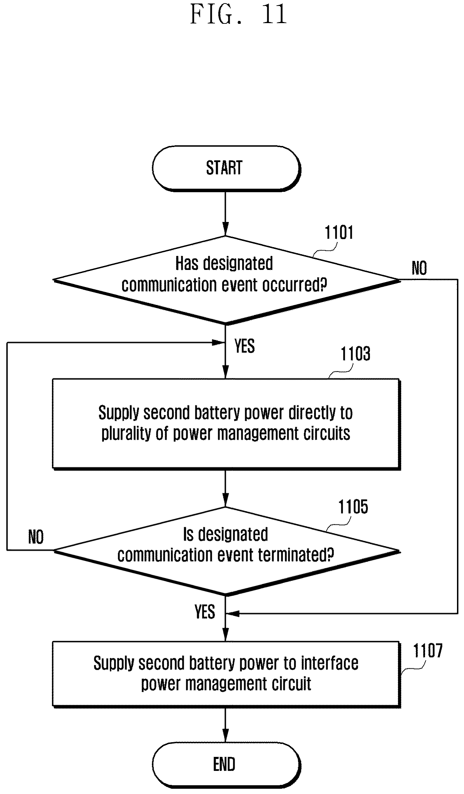

FIG. 11 is a flowchart illustrating the operation of an electronic device (e.g., the electronic device 101 in FIG. 1, FIG. 2, FIG. 3, or FIG. 7) according to an embodiment.

An electronic device 101 according to an embodiment may include a plurality of batteries including a first battery 701 and a second battery 703. The electronic device 101 according to an embodiment may include a communication circuit or modem 723 (e.g., the processor 120 or the communication module 190 in FIG. 1), a radio frequency integrated circuit (RFIC) 721 (e.g., the communication module 190 in FIG. 1), and a power amplifier 719. According to an embodiment, a plurality of power management circuits 715, for example, a power amplifier power management IC, may supply power to the power amplifier 719.

According to an embodiment, one or more processors (e.g., the processor 120 or the communication module 190 in FIG. 1 or the communication circuit 723 in FIG. 7) may identify whether a designated communication event has occurred in operation 1101.

According to an embodiment, when it is determined that a designated communication event has occurred, one or more processors may control power of the second battery 703 to be directly supply to the plurality of power management circuits 715 in operation 1103. For example, one or more processors may transmit directly power of the second battery 703 to the plurality of power management circuits 715 in parallel while transmitting power of the first battery 701 to the plurality of power management circuits 715 through the interface power management circuit 713, thereby allowing the plurality of power management circuits 715 to supply sufficient power to the power amplifier 719.

According to an embodiment, one or more processors may control a switch (e.g., the switch 707 in FIG. 7), based on the occurrence of a designated communication event, to directly supply power of the second battery 703 to the plurality of power management circuits 715.

According to an embodiment, one or more processors may determine whether the designated communication event is terminated in operation 1105.

According to an embodiment, when the designated communication event is terminated due to, for example, completion of signal transmission based on satellite communication, one or more processors may control power of the second battery 703 to be supplied to an interface power management circuit (e.g., the interface power management circuit 713 in FIG. 7) in operation 1107.

According to an embodiment, based on the termination of the designated communication event, one or more processors may control the switch 707 to supply power of the second battery 703 to the interface power management circuit 713 via a power line (e.g., the power line 802 in FIG. 8).

According to an embodiment, when the designated communication event does not occur (No in operation 1101), one or more processors may control power of the second battery 703 to be supplied to the plurality of power management circuits 715 via the interface power management circuit 713 in operation 1107.

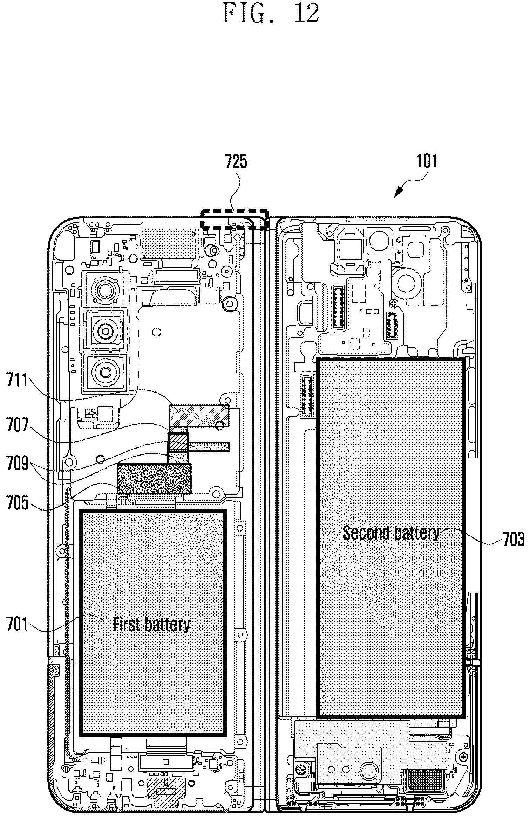

FIG. 12 is a drawing illustrating the structure of an electronic device (e.g., the electronic device 101 in FIG. 1, FIG. 2, FIG. 3, or FIG. 7) according to an embodiment.

According to an embodiment, an electronic device 101 may be implemented as a foldable electronic device having a flexible display as illustrated in FIG. 2.

The electronic device 101 according to an embodiment may include a plurality of batteries including a first battery (e.g., the first battery 701 in FIG. 7) and a second battery (e.g., the second battery 703 in FIG. 7). In an example where the electronic device 101 is implemented as a foldable electronic device as illustrated in FIG. 2, the first battery 701 may be disposed, for example, within a first housing (e.g., the first housing 201 in FIG. 2), and the second battery 703 may be disposed, for example, within a second housing (e.g., the second housing 202 in FIG. 2). For example, the second battery 703 may be connected via a printed circuit board (e.g., a sub-printed circuit board) 730 that is different from the printed circuit board (e.g., a main printed circuit board) 710 to which other components are connected.

An electronic device 101 according to an embodiment may perform satellite communication using power supplied from the first battery 701 and the second battery 703 and transmit and/or receive signals through an antenna 725.

In an electronic device 101 according to an embodiment, power from the second battery 703 may be connected to a switch (e.g., the switch 707 in FIG. 7) through a power line (e.g., C2C cable) (e.g., the power line 705 in FIG. 7), and, depending on the operation of the switch 707, may be connected to a first power line 709 connected to an interface power management circuit (e.g., the interface power management circuit 713 in FIG. 7) or may be connected to a second power line 711 directly connected to a plurality of power management circuits 715.

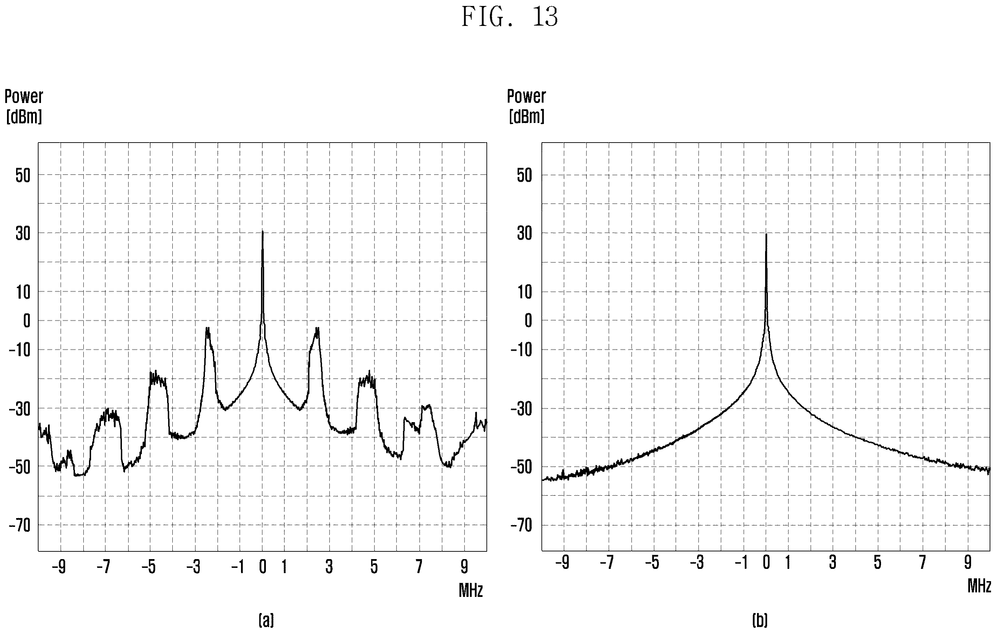

FIG. 13 is a diagram illustrating the effects of the operation of an electronic device according to an embodiment.

According to an embodiment, when performing communication in a typical terrestrial communication system or generally operating, one or more processors (e.g., the processor 120 in FIG. 1 or the communication circuit 723) may connect power of the second battery 703 to the power line 801 from the first battery 701 via the power supply line 802 illustrated in FIG. 8, thereby supplying the power of the second battery 703 to the interface power management circuit 713 together with the power of the first battery 701.

According to an embodiment, when performing non-terrestrial communication such as satellite communication, if power from the second battery 703 is supplied together with power from the first battery 701 to the interface power management circuit 713, a power amplifier (e.g., the power amplifier 719 in FIG. 7) may consume a large current of 2 A or more momentarily, and the current of a plurality of power management circuits (e.g., the plurality of power management circuits 715 in FIG. 7), the power amplifier 719 and/or the battery may instantaneously drop, thereby causing a voltage drop in the power amplifier 719, which may result in a decrease in the transmission power. To compensate for this drop in transmission power, an RFIC (e.g., the RFIC 721 in FIG. 7) may apply a larger RF power to the power amplifier 719, which may decrease the linearity of the power amplifier 719 and cause gain saturation, thereby reducing the performance of the transmission waveform. The plurality of power management circuits 715 may need to compensate for more current, which may cause a momentary voltage overshoot (VCC overshoot). This may result in a phenomenon in which the voltage (PA VCC voltage) of the power amplifier 719 fluctuates as shown in graph (a) in FIG. 13 during satellite signal transmission.

According to an embodiment, based on a designated communication event such as satellite communication signal transmission, one or more processors may directly supply, along a power supply line 902 as illustrated in FIG. 9, power from the second battery 703 to the plurality of power management circuits 715 in parallel with a power line 901 from the first battery 701.

According to an embodiment, by supplying additional current by directly supplying power to the plurality of power management circuits 715 in parallel with the power line 901 from the first battery 701, it can be seen that the current supply to the power amplifier 719 increases when using high-output transmission power, such as satellite communication, and the voltage of the power amplifier 719 is stabilized as shown in graph (b) in FIG. 13.

An electronic device (e.g., the electronic device 101 in FIG. 1, FIG. 2, FIG. 3 or FIG. 7) according to an embodiment may include a power amplifier (e.g., the power amplifier 719 in FIG. 7), an interface power management circuit (e.g., the interface power management circuit 713 in FIG. 7), a first battery (e.g., the first battery 701 in FIG. 7) configured to supply power to the interface power management circuit, a plurality of power management circuits (e.g., the plurality of power management circuits 715 in FIG. 7) configured to supply power from the interface power management circuit to the power amplifier, a second battery (e.g., the second battery 703 in FIG. 7) connected in parallel with the first battery and configured to selectively supply power to the interface power management circuit or the plurality of power management circuits, and one or more processors (e.g., the processor 120 in FIG. 1) configured to control power of the second battery to be directly supplied to the plurality of power management circuits, based on occurrence of a designated communication event.

According to an embodiment, the electronic device may further include a switch (e.g., the switch 707 in FIG. 7) configured to switch the power of the second battery to the interface power management circuit or one of the plurality of power management circuits.

According to an embodiment, the one or more processors may control the switch at a time when signal transmission conditions based on the designated communication event are met, so that the power of the second battery may be directly supplied to the plurality of power management circuits.

According to an embodiment, the designated communication event may include a condition in which a satellite communication connection is established based on satellite pointing.

According to an embodiment, the time when the signal transmission conditions are met may be determined by a communication processor.

According to an embodiment, the one or more processors may control the switch to supply the power of the second battery to the interface power management circuit when signal transmission based on the designated communication event is completed.

According to an embodiment, the one or more processors may control the power of the second battery to be supplied to the interface power management circuit, based on termination of the designated communication event.

According to an embodiment, the one or more processors may include an application processor, and the application processor may determine the occurrence of the designated communication event, based on an operation of a communication application running on the electronic device.

According to an embodiment, the electronic device may further include a display (e.g., the display module 160 in FIG. 1), and the one or more processors may provide a satellite communication service interface through the display.

According to an embodiment, the designated communication event may include receiving a satellite communication operation command through the satellite communication service interface.

According to an embodiment, the designated communication event may include a transmission command for a specific message through the satellite communication service interface.

The embodiments of the disclosure set forth herein are merely specific examples that have been presented to easily explain the technical contents of the disclosure and help understanding of the disclosure, and are not intended to limit the scope of the disclosure. Therefore, the scope of various embodiments of the disclosure should be construed to include, in addition to the embodiments set forth herein, all changes and modifications derived based on the technical idea of various embodiments of the disclosure.

The electronic device according to an embodiment may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

An embodiment as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each element (e.g., a module or a program) of the above-described elements may include a single entity or multiple entities, and some of the multiple entities may also be separately disposed in another element. According to an embodiment, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a power amplifier;
an interface power management circuit;
a first battery configured to supply power to the interface power management circuit;
a plurality of power management circuits configured to supply power from the interface power management circuit to the power amplifier;
a second battery connected in parallel with the first battery and configured to selectively supply power to the interface power management circuit or the plurality of power management circuits; and
one or more processors configured to control power of the second battery to be directly supplied to the plurality of power management circuits, based on occurrence of a designated communication event.

2. The device of claim 1,
further comprising a switch configured to switch the power of the second battery to the interface power management circuit or one of the plurality of power management circuits.

3. The device of claim 2,
wherein the one or more processors are configured to control the switch at a time when signal transmission conditions based on the designated communication event are met, so that the power of the second battery is directly supplied to the plurality of power management circuits.

4. The device of claim 3,
wherein the designated communication event comprises a condition in which a satellite communication connection is established based on satellite pointing.

5. The device of claim 3,
wherein the time when the signal transmission conditions are met is determined by a communication processor.

6. The device of claim 3,
wherein the one or more processors are configured to control the switch to supply the power of the second battery to the interface power management circuit when signal transmission based on the designated communication event is completed.

7. The device of claim 1,
wherein the one or more processors are configured to control the power of the second battery to be supplied to the interface power management circuit, based on termination of the designated communication event.

8. The device of claim 1,
wherein the one or more processors comprise an application processor, and
wherein the application processor is configured to determine the occurrence of the designated communication event, based on an operation of a communication application running on the electronic device.

9. The device of claim 1,
further comprising a display,
wherein the one or more processors are configured to provide a satellite communication service interface through the display.

10. The device of claim 9,
wherein the designated communication event comprises receiving a satellite communication operation command through the satellite communication service interface.

11. The device of claim 9,
wherein the designated communication event comprises a transmission command for a specific message through the satellite communication service interface.

12. A method for an electronic device comprising a first battery configured to supply power to an interface power management circuit, a plurality of power management circuits configured to supply power from the interface power management circuit to a power amplifier, and a second battery connected in parallel with the first battery and configured to selectively supply power to the interface power management circuit or the plurality of power management circuits, the method comprising:
identifying whether a designated communication event has occurred;
controlling, based on occurrence of the designated communication event, power of the second battery to be directly supplied to the plurality of power management circuits in parallel with power of the first battery; and
controlling, based on non-occurrence of the designated communication event, power of the second battery to be supplied to the interface power management circuit.

13. The method of claim 12, further comprising
based on the occurrence of the designated communication event, controlling the power of the second battery to be directly supplied to the plurality of power management circuits at a time when signal transmission conditions are met.

14. The method of claim 13,
wherein the designated communication event comprises a condition in which a satellite communication connection is established based on satellite pointing.

15. The method of claim 13, further comprising
controlling the power of the second battery to be supplied to the interface power management circuit when signal transmission based on the designated communication event is completed.
